# EUROPÄISCHE PATENTSCHRIFT

(11) **EP 3 439 805 B1**
(45) Veröffentlichungstag und Bekanntmachung des Hinweises auf die Patenterteilung: **03.06.2020**
(21) Anmeldenummer: 17712102.7
(22) Anmeldetag: 20.03.2017
(51) Int. Cl.: B21B 31/07, F16C 35/078

(54) **VORRICHTUNG UND VERFAHREN ZUM AUFZIEHEN EINES LAGERS AUF EINEN WALZENZAPFEN UND ZUM ABZIEHEN DES LAGERS VON DEM WALZENZAPFEN**
DEVICE AND METHOD FOR PULLING A BEARING ONTO A ROLL JOURNAL AND FOR PULLING THE BEARING OFF THE ROLL JOURNAL
DISPOSITIF ET PROCÉDÉ POUR MONTER UN PALIER SUR UN TOURILLON DE CYLINDRE ET POUR DÉMONTER LE PALIER DU TOURILLON DE CYLINDRE

(30) Priorität: 08.04.2016 DE 102016205874; 29.07.2016 DE 102016214011
(43) Veröffentlichungstag der Anmeldung: 13.02.2019
(73) Patentinhaber: SMS Group GmbH, 40237 Düsseldorf (DE)
(72) Erfinder: KNIE, Daniel, 57258 Freudenberg (DE); TUCAK, Andrej, 57482 Wenden-Brün (DE)
(74) Vertreter: Kross, Ulrich
(86) Internationale Anmeldenummer: PCT/EP2017/056502
(87) Internationale Veröffentlichungsnummer: WO 2017/174335

(56) Entgegenhaltungen:
- EP-A1- 1 745 867
- CN-A- 102 513 968
- DE-A1- 2 144 711
- JP-A- H0 824 917

## Beschreibung

Die Erfindung betrifft eine Vorrichtung und ein Verfahren zum Aufziehen eines Lagers auf einen Walzenzapfen und zum Abziehen des Lagers von dem Walzenzapfen einer Walze, beispielsweise einer Stützwalze. Mit dem Lager ist die Walze in einem Walzgerüst zum Walzen von Metallband drehbar gelagert.

Derartige Vorrichtungen und Verfahren sind im Stand der Technik grundsätzlich bekannt, z. B. aus der deutschen Offenlegungsschrift DE 2 144 711. Konkret weist die dort offenbarte Vorrichtung eine erste Kolben-Zylindereinheit mit einem ringförmigen Zylinder und mit einem ringförmigen inneren Kolben auf. Der innere Kolben ist auf einem ballenfernen Abschnitt des Walzenzapfens axial verschiebbar gelagert. Der Zylinder ist zwischen dem Lager und dem inneren Kolben ebenfalls auf dem ballenfernen Abschnitt axial verschiebbar gelagert. Der ringförmige Zylinder und der innere Kolben überlappen teilweise und sind in axialer Richtung relativ zueinander verschiebbar gelagert. Zwischen dem ringförmigen Zylinder und dem inneren Kolben der ersten Kolben-Zylindereinheit ist eine Aufziehdruck-Kammer ausgebildet. An dem ballenfernen Ende des Walzenzapfens ist ein Anschlagring als Anschlag für den inneren Kolben der ersten Kolben-Zylindereinheit festgelegt. Der innere Kolben der ersten Kolben-Zylindereinheit weist ein Außengewinde auf, auf welches eine Mutter aufschraubbar ist zum Fixieren des Lagers in axialer Richtung.

Darüber hinaus weist die bekannte Vorrichtung eine zweite Kolben-Zylindereinheit auf mit einem ringförmigen äußeren Kolben, welcher koaxial und radial weiter außen zu dem inneren Kolben der ersten Kolben-Zylindereinheit angeordnet ist. Auch der ringförmige äußere Kolben der zweiten Kolben-Zylindereinheit ist axial verschiebbar gelagert. Der äußere Kolben besitzt einen Außenflansch, welcher eine Abziehdruck-Kammer der zweiten Kolben-Zylindereinheit in axialer Richtung einseitig begrenzt. Insofern bildet die besagte deutsche Offenlegungsschrift DE 2 144 711 den nächstliegenden Stand der Technik; gegenüber diese Druckschrift ist der Vorrichtungsanspruch 1 abgegrenzt.

Der Erfindung liegt die Aufgabe zugrunde, eine gegenüber dem Stand der Technik alternative Vorrichtung und ein alternatives Verfahren zum Aufziehen eines Lagers auf einen Walzenzapfens einer Walze, insbesondere einer Stützwalze, sowie zum Abziehen des Lagers von dem Zapfen bereitzustellen.

Diese Aufgabe wird vorrichtungstechnisch durch den Gegenstand des Anspruchs 1 gelöst. Dieser ist dadurch gekennzeichnet, dass - im Unterschied zu der einleitend beschriebenen bekannten Vorrichtung - der ringförmige Zylinder mit einem an dessen ballenfernen Seite angeschlossenen ringförmigen Zylinderdeckel die Zylindereinheit der zweiten Kolben-Zylindereinheit bildet, in welcher der äußere Kolben axial verschiebbar gelagert ist, und dass die Abziehdruck-Kammer in axialer Richtung durch den Außenflansch des äußeren Kolbens und den Zylinderdeckel begrenzt ist.

Die Begriffe "axial" und "radial" beziehen sich in der vorliegenden Beschreibung immer auf die Längsachse der Walze (= die Mittelachse der ringförmigen erfindungsgemäßen Vorrichtung).
Der ringförmige Zylinder fungiert im Sinne der Erfindung vorteilhafterweise sowohl als Zylinder für die erste Kolben-Zylindereinheit wie auch als Zylinder für die zweite Kolben-Zylindereinheit. Dementsprechend sind in dem ringförmigen Zylinder sowohl der innere Kolben wie auch der äußere Kolben axial verschiebbar gelagert. Dadurch, dass der äußere Kolben in dem Zylinder geführt ist, sind zur Übertragung der im Walzbetrieb entstehenden Axialkräfte keine Durchdringungen und Verriegelungsbolzen wie im Stand der Technik erforderlich. So wird im Walzbetrieb die entstehende Axialkraft über größtmögliche Stirnflächen von dem ringförmigen Zylinder über die Mutter, über den inneren Kolben und über den Anschlagring in die Walze übertragen, was eine größtmögliche Stabilität und den geringsten Verschleiß bewirkt. Konkret kann insbesondere eine direkte Kraftübertragung von dem Zylinder auf die Mutter auf den inneren Zylinder erfolgen, ohne die Zwischenschaltung von z. B. Bolzen.

Bei der beanspruchten Erfindung hat die beanspruchte Mutter eine Doppelfunktion: einerseits dient sie zur Lagefixierung der Vorrichtung und andererseits bildet ihre Stirnseite eine Anschlagfläche für den äußeren Kolben beim Abziehen des Lagers von dem Walzenzapfen.

Gemäß einem ersten Ausführungsbeispiel ist die zweite Kolben-Zylindereinheit als doppelt wirkende Zylindereinheit ausgebildet. Das Vorsehen einer ausbildbaren Positionier-Druckkammer 3, welche in axialer Richtung durch den äußeren Kolben und den ringförmigen Zylinder begrenzt ist, ermöglicht vorteilhafterweise einen einfachen Rückzug des äußeren Kolbens in axialer Richtung von dem Walzenballen weg, ohne dass dafür raumgreifende Federn erforderlich wären, wie im Stand der Technik. Konkret bietet die Positionier-Druckkammer den Vorteil, dass der Rückzug des äußeren Kolbens bereits bei sehr geringen Drücken erfolgen kann, und darüber hinaus erfordert sie nur einen vergleichsweise geringen Platzbedarf.

Die oben genannte Aufgabe wird weiterhin durch ein Verfahren zum Aufziehen des Lagers auf den Walzenzapfen nach Anspruch 10 sowie ein Verfahren zum Abziehen des Lagers von dem Walzenzapfen nach Anspruch 11, jeweils mit Hilfe der Vorrichtung nach einem der Ansprüche 2-9 gelöst.

Dadurch, dass die Mutter als Anschlag für den äußeren Kolben dient, wird die Kraft beim Abziehvorgang bis zum inneren Kolben und somit auf die Walze übertragen. Die Mutter ist hierbei so geschaltet, dass ein leichtes Drehen von Hand möglich ist, wobei nur die Reibung im Gewinde zu überwinden ist und nicht etwa noch die Reibung von Dichtungen des äußeren Kolbens.

Weitere vorteilhafte Ausgestaltungen der erfindungsgemäßen Vorrichtung sowie der beiden erfindungsgemäßen Verfahren sind Gegenstand der abhängigen Ansprüche.

Der Beschreibung sind insgesamt 14 Figuren beigefügt, wobei
- Figur 1: eine Walze mit auf ihren Zapfen aufgezogenen Lagern und mit der erfindungsgemäßen Vorrichtung;
- Figur 2: eine Detaildarstellung zu Figur 1 mit der Anordnung der erfindungsgemäßen Vorrichtung am ballenfernen Ende des Walzenzapfens;
- Figur 3: den Aufbau der erfindungsgemäßen Vorrichtung;
- Figuren 4-9: Teilschritte des erfindungsgemäßen Verfahrens zum Aufziehen des Lagers auf den Walzenzapfen; und
- Figuren 10-14: Teilschritte im Rahmen des erfindungsgemäßen Verfahrens zum Abziehen des Lagers von dem Walzenzapfen
zeigen.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

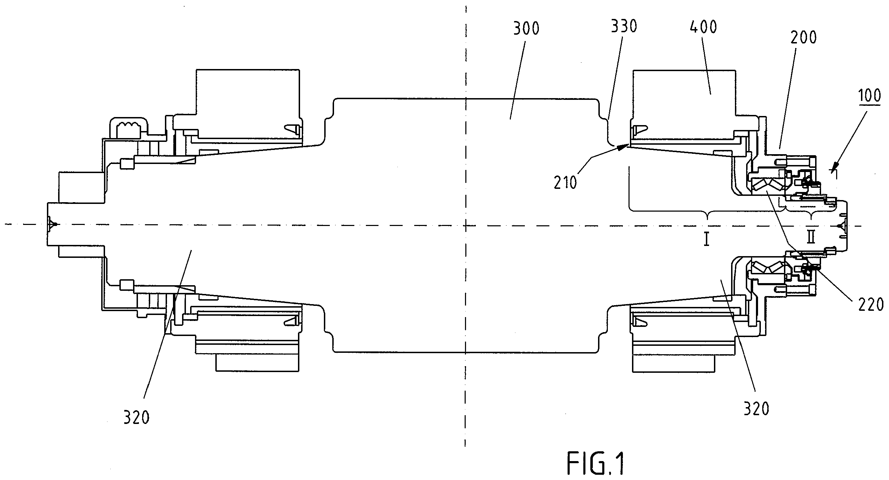

Figur 1 zeigt eine klassische Walze 300, welche mit ihren Walzenzapfen über Lagergehäuse 400, auch Einbaustücke genannt, in einem Walzgerüst z. B. zum Walzen von Metallband drehbar gelagert sind. Die Lagerung erfolgt in dem Walzgerüst sowohl über ein Ölfilmlager 210 wie auch über ein Axiallager. Das Ölfilmlager ist nicht Gegenstand der Erfindung ist deshalb auch in der Figur 1 nicht näher bezeichnet. Es ist ausgebildet zwischen den Einbaustücken 400 und den auf den Walzenzapfen aufgezogenen Zapfenbuchsen. Es dient insbesondere zum Aufnehmen von Kräften in radialer Richtung R, wie sie während des Walzbetriebs auftreten.

Auf einem abgesetzten Abschnitt des Walzenzapfens, welcher entfernter als das Ölfilmlager zu dem Ballen 330 der Walze 300 ausgebildet ist, ist zusätzlich ein Axiallager 220 angeordnet, in Figur 1 zu erkennen durch die schräg angestellten Rollen. Das Axiallager dient zur Aufnahme von axialen Kräften auf die Walze 300, wie sie ebenfalls während des Walzbetriebs auftreten können. Zur begrifflichen Unterscheidung wird der axiale Bereich, in dem die beiden Lager 200, d. h. sowohl das Ölfilmlager 210 wie auch das Axiallager 220 angeordnet sind, als ballennaher Abschnitt I des Walzenzapfens bezeichnet. Daran angrenzend in noch weiterer Entfernung zum Walzenballen 330 schließt sich ein ballenferner Abschnitt II an, in dem die erfindungsgemäße Vorrichtung 100 zum Aufziehen des Lagers 200 auf den ballennahen Abschnitt I und zum Abziehen des Lagers von dem ballennahen Abschnitt I angeordnet ist. Der Begriff Lager 200 im Sinne der Erfindung meint beispielsweise das Ölfilmlager 210 und/oder das Axiallager 220.

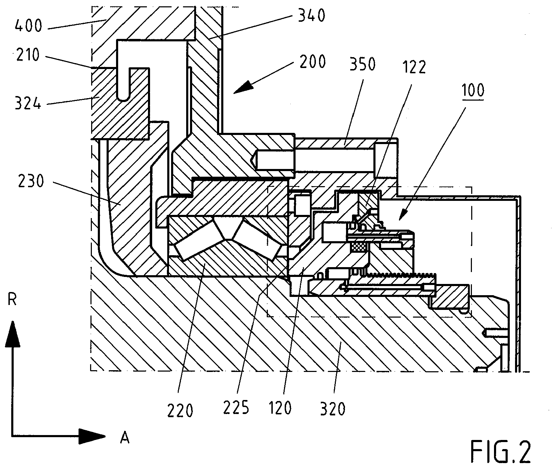

Figur 2 zeigt eine Detailansicht aus Figur 1. Konkret ist hier das Axiallager 220 zu erkennen, welches in axialer Richtung über einen Druckschulterring 230 mit dem Ölfilmlager 210, insbesondere mit der Zapfenbuchse 324 als Teil des Ölfilmlagers kraftschlüssig verbunden ist.

Die erfindungsgemäße Vorrichtung 100 generiert axiale Kräfte, zum einen eine Aufziehkraft in Richtung Walzenballen, d. h. in Fig. 2 nach links, zum Aufziehen des Lagers 200 auf den Walzenzapfen 320. Diese axiale Aufziehkraft greift an der ballenfernen Stirnseite 225 des Axiallagers 220 an und überträgt sich dann von diesem Axiallager 220 über den Druckschulterring 230 auch auf das Ölfilmlager 210, insbesondere auf die Zapfenbuchse 324.

Darüber hinaus generiert die erfindungsgemäße Vorrichtung 100 eine Abziehkraft weg von dem Walzenballen 330, d. h. in Figur 2 nach rechts. Diese wird über einen ringförmigen Zylinder 120 und Zylinderdeckel 122, die Teile der erfindungsgemäßen Vorrichtung 100 sind, auf das Einbaustück 400 übertragen. Die Übertragung erfolgt über einen ringförmigen Deckel 350, welcher mit dem ringförmigen Koppelelement 340 vorzugsweise verschraubt ist und kraftschlüssig an dem Einbaustück 400 angreift zum Übertragen der Abziehkraft auf die Zapfenbuchse 324 bzw. das Lager 200.

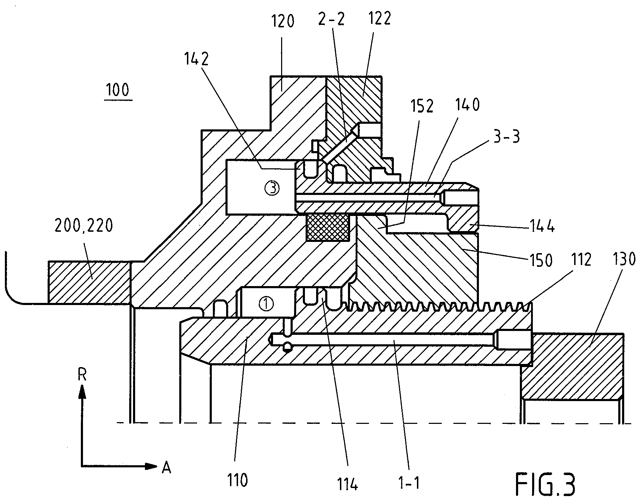

Figur 3 zeigt den grundsätzlichen Aufbau der erfindungsgemäßen Vorrichtung 100. Zentrales Element ist der besagte ringförmige Zylinder 120. Er dient sowohl als Zylinder für eine erste Kolben-Zylindereinheit wie auch als Zylinder für eine zweite Kolben-Zylindereinheit. Die erste Kolbenzylindereinheit wird durch den ringförmigen Zylinder 120 und den darin axial verschiebbar gelagerten ringförmigen inneren Kolben 110 gebildet. Sowohl der ringförmige Zylinder 120 wie auch der innere Kolben 110 sind auf dem ballenfernen Abschnitt II des Walzenzapfens 320 - auch relativ zueinander - axial verschiebbar gelagert. Der ringförmige Zylinder 120 ist zwischen dem Lager 200, insbesondere dem Axiallager 220, und dem inneren Kolben 110, insbesondere dessen äußerem Flansch 114 gelagert, zum Übertragen der besagten axialen Kräfte auf insbesondere das Axiallager 220. Die Druckkammer der ersten Kolben-Zylindereinheit wird im Rahmen der vorliegenden Beschreibung als Aufziehdruck-Kammer bezeichnet; sie ist zwischen dem ringförmigen Zylinder und dem inneren Kolben ausgebildet und trägt das Bezugszeichen 1. Die Bezeichnung Aufziehdruck-Kammer deutet auf ihre Bedeutung beim Aufziehen des Lagers 200 auf den Walzenzapfen 320 hin. Die Aufziehdruck-Kammer 1 wird über einen beispielsweise als Bohrung innerhalb des inneren Kolbens 110 ausgebildeten Kanal 1-1 mit einem Druckmedium beaufschlagt.

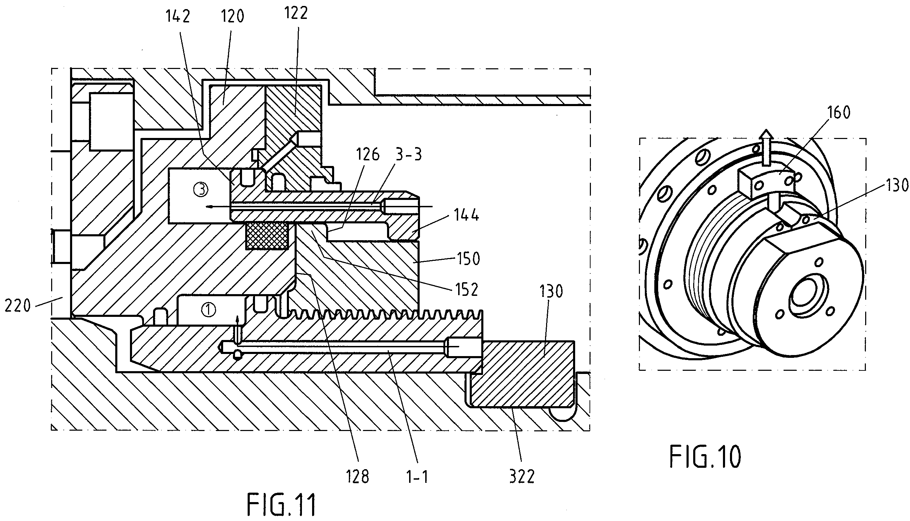

Neben der ersten Kolben-Zylindereinheit dient der ringförmige Zylinder 120 auch zur Ausbildung einer zweiten Kolben-Zylindereinheit insofern, als dass in dem ringförmigen Zylinder 120 auch ein äußerer Kolben 140 axial verschiebbar gelagert ist. Der Begriff "äußerer" Kolben 140 deutet an, dass der äußere Kolben koaxial und radial weiter außen in Bezug auf den inneren Kolben 110 angeordnet und axial verschiebbar gelagert ist. Der äußere Kolben 140 besitzt einen Außenflansch 142, welcher sich in Bezug auf die Längserstreckung des äußeren Kolbens in radialer Richtung R nach außen erstreckt. Der Außenflansch 142 begrenzt in axialer Richtung A eine Abziehdruck-Kammer 2; siehe beispielsweise Figur 10. Die Abziehdruck-Kammer 2 wird über einen beispielsweise innerhalb des äußeren Kolbens 140 ausgebildeten Kanal 2-2 mit einem Druckmedium versorgt. Die Abziehdruck-Kammer 2 ist Teil der doppelt-wirkenden zweiten Kolben-Zylindereinheit; diese Abziehdruck-Kammer 2 wird - abgesehen von dem Außenflansch 142 - in axialer Richtung auch begrenzt durch einen auf den ringförmigen Zylinder 120 vorzugsweise aufgeschraubten Zylinderdeckel 122.

Weiterhin ist in Figur 3 eine auf ein Außengewinde 112 des inneren Kolbens 110 aufschraubbare Mutter 150 zu erkennen. Sie dient zum Fixieren des Lagers 200 nach dem Aufziehen auf den Walzenzapfen während des Walzbetriebes in axialer Richtung. Während die Mutter 150 sich beim Fixieren des Lagers in axialer Richtung A über das Außengewinde an dem inneren Kolben 110 abstützt, stützt sich der innere Kolben dann an einem Anschlagring 130 gegenüber dem Walzenzapfen ab. Der Anschlagring 130 ist an dem ballenfernen Ende des Walzenzapfens 320 in axialer Richtung in einer Nut 322, vorzugsweise einer Ringnut aufgenommen. Der Anschlagring 130 kann zum Einbringen in die Nut beispielsweise als Klemmring oder als Klappring ausgebildet sein.

Die Ausbildung der zweiten Kolben-Zylindereinheit als doppelt-wirkende Kolben-Zylindereinheit zeigt sich darin, dass sie neben der Abziehdruck-Kammer 2 eine weitere Druckkammer, eine sogenannte Positionier-Druckkammer 3 aufweist, welche in axialer Richtung einerseits durch die Stirnseite des äußeren Kolbens 140 und andererseits durch den ringförmigen Zylinder 120 begrenzt ist. Die Positionier-Druckkammer 3 wird beispielsweise über einen Kanal 3-3 in dem äußeren Kolben 140 mit Druckmedium versorgt. Diese Positionier-Druckkammer 3 dient, wie später noch bei der Beschreibung des erfindungsgemäßen Verfahrens zum Abziehen des Lagers von dem Walzenballen erläutert werden wird, zum Verschieben des äußeren Kolbens von dem Walzenballen weg. Demgegenüber dient die besagte Abziehdruck-Kammer 2 zum Verschieben des äußeren Kolbens 140 auf den Walzenballen 330 hin.

Die Abziehdruck-Kammer 2 ist - in axialer Richtung A gesehen - ballenferner als die Positionier-Kammer 3 ausgebildet.

Neben dem besagten Außenflansch 142 weist der äußere Kolben an seinem ballenfernen Ende einen Innenflansch 144 auf, welcher sich radial nach innen, d. h. in Richtung des Inneren des ringförmigen äußeren Kolbens 140 erstreckt. Weiterhin ist an dem ballennahen Ende der Mutter 150 ein sich radial nach außen erstreckender Außenflansch 152 ausgebildet. Die Mutter 150 und der äußere Kolben überlappen sich zumindest teilweise. Der äußere Kolben 140 ist radial weiter außerhalb als die Mutter 150 gelagert, wobei jedoch der Innenflansch 144 des äußeren Kolbens und der Außenflansch 152 der Mutter sich in axialer Richtung A gegenüberstehen. Der Außenflansch 152 der Mutter ist ballennäher als der Innenflansch 144 des äußeren Kolbens angeordnet. Der Zylinderdeckel 122 kann als separates Bauteil ausgebildet und mit dem Zylinder 120 zum Beispiel durch Verschraubung verbindbar sein; alternativ können der Zylinder 120 und sein Deckel 122 jedoch auch einstückig ausgebildet sein.

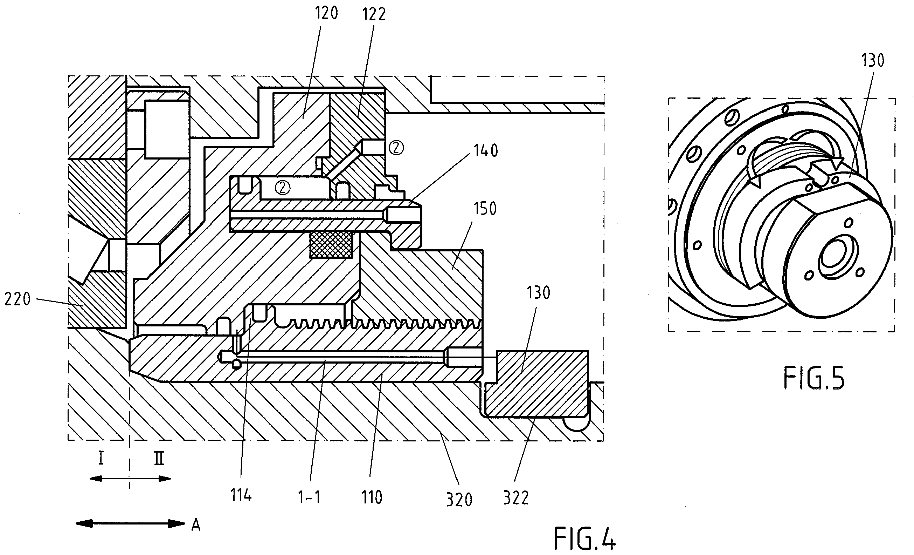

Das erfindungsgemäße Verfahren zum Aufziehen des Lagers 200 auf den ballennahen Abschnitt I des Walzenzapfens mit Hilfe der zuvor beschriebenen erfindungsgemäßen Vorrichtung 100 wird nachfolgend unter Bezugnahme auf die Figuren 4 bis 9 detailliert beschrieben:
Zunächst wird das Lager 200, vorzugsweise das Ölfilmlager und das Axiallager auf dem ballennahen Abschnitt I des Walzenzapfens 320 "locker" aufgeschoben, d. h. vorpositioniert. Gleichermaßen wird auch die Vorrichtung 100 auf dem ballenfernen Abschnitt II des Walzenzapfens 320 vorpositioniert, wie dies in Figur 4 gezeigt ist. Anschließend wird der Anschlagring 130 in der Ringnut 322 festgelegt. Wenn der Anschlagring 130 als Klappring ausgebildet ist, werden seine beiden Hälften in die Ringnut 322 hineingeklappt, wie dies in Figur 5 veranschaulicht ist. Eingeklappt in die Ringnut bildet der Anschlagring 130 dann einen in axialer Richtung A festgelegten Anschlag für den inneren Kolben 110.

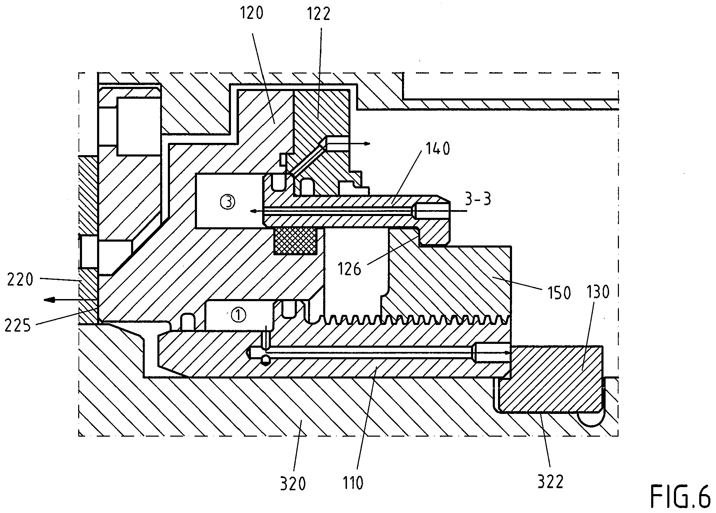

Zu Beginn des Aufziehvorganges wird zunächst ein Druckmittel durch den Kanal 1-1 im Inneren des inneren Kolbens 110 geleitet, wodurch sich die Aufziehdruck-Kammer 1 zwischen dem ringförmigen Zylinder 120 und dem äußeren Flansch 114 des inneren Kolbens ausbildet, wie dies in Figur 6 zu erkennen ist. Diese Aufziehdruck-Kammer 1 wird sodann durch das Druckmedium mit einem Aufziehdruck beaufschlagt, wodurch der innere Kolben 110 axial nach außen gegen den Anschlagring 130 verschoben wird. Gleichzeitig wird der Zylinder 120 in axialer Richtung A nach innen gegen das Lager 200 verfahren, wodurch das Lager auf den ballennahen Abschnitt I des Walzenzapfens 320 weiter aufgezogen/aufgeschoben wird. Die ausgebildete Aufziehdruck-Kammer 1, der nach außen verfahrene innere Kolben 110 sowie der nach innen, d. h. in Richtung Walzenballen, d. h. in Figur 6 nach links, verfahrene Zylinder 120 sind in Figur 6 dargestellt. Es ist insbesondere zu erkennen, dass das Lager 220 an der Kontaktfläche 225 von dem ringförmigen Zylinder 120 berührt und mit dem Aufziehdruck beaufschlagt wird, wodurch, wie in Figur 6 ebenfalls zu erkennen ist, das Axiallager 220 gegenüber seiner Position in Figur 4 weiter nach links in Richtung Walzenballen verschoben worden ist.

Über den in Figur 2 zu erkennenden Druckschulterring 230 wird die Aufziehkraft von dem Axiallager 220 auch auf das Ölfilmlager, und insbesondere die das Ölfilmlager mitausbildende Zapfenbuchse 324 übertragen, wodurch das Ölfilmlager und insbesondere die Zapfenbuchse ebenfalls weiter in Richtung Walzenballen 330 aufgezogen werden.

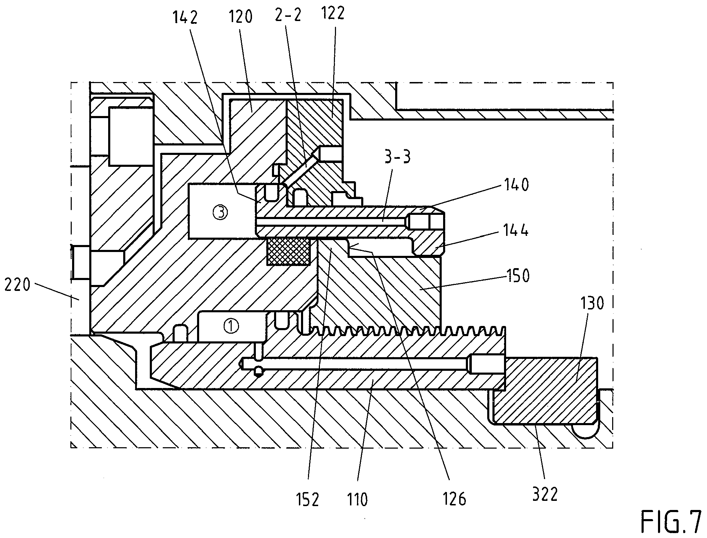

Damit der Aufziehdruck insbesondere während des Walzbetriebes nicht permanent nur von dem Druckmedium aufgebracht werden muss, wird nachfolgend die Positionier-Druckkammer 3 über den Kanal 3-3 ebenfalls mit einem Druckmedium beaufschlagt, wodurch der äußere Kolben 140, wenn auch nur minimal, axial nach außen von dem Walzenballen weg verschoben wird. Der ringförmige Zylinder 120 bleibt dabei nach wie vor durch den Aufziehdruck in der Aufziehdruck-Kammer 1 gegen das Walzenlager 220 gedrückt. Durch die besagte Verschiebung des äußeren Kolbens 140 wird eine erste Kontaktfläche 126 zwischen dem inneren Flansch 144 des äußeren Kolbens und dem äußeren Flansch 152 der Mutter 150 aufgehoben. Die Mutter wird dadurch aus der bis dahin bestehenden Reibblockade an der Kontaktfläche 126 gelöst. Sie ist dann frei und wird auf dem Außengewinde des inneren Kolbens 110 in Richtung Walzenballen 330 gegen den Zylinder 120 gedreht, um diesen in seiner kraftschlüssigen Anschlagsposition gegen das Lager 220 zu fixieren. Die dann bzw. so entstandene Position ist in Figur 7 gezeigt.

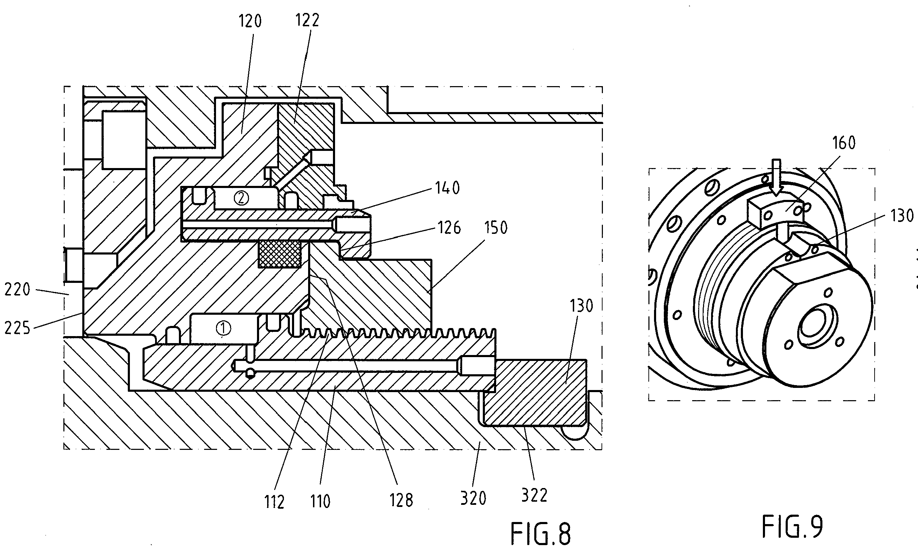

Eine Verdrehung und eine axiale Verlagerung der Mutter 150 wird durch ein Haltestück 160 verhindert, welches an der ballenfernen Stirnseite der Mutter 150 befestigt wird, wie dies in Figur 9 dargestellt ist.

Zum Einfahren des äußeren Kolbens 140 wird der Kanal 3-3 zwecks Abfluss des Druckmittels aus Kammer 3 geöffnet. Sodann Zuführen von Druckmittel durch den Kanal 2.2, so dass sich zwischen dem Zylinderdeckel 122 und dem Außenflansch 142 des äußeren Kolbens die Abziehdruck-Kammer 2 ausbildet. Dadurch wird dann der äußere Kolben 140 bei feststehendem Zylinderdeckel 122 in Figur 7 nach links in Richtung Walzenballen 330 verschoben, wie dies in Figur 8 gezeigt ist. Diese Maßnahme dient zum Schutz der Laufflächen des Kolbens 140.

Am Ende des Aufziehvorganges und während des Walzbetriebes sind die Einzelteile der erfindungsgemäßen Vorrichtung wie in den Figuren 8 und 9 dargestellt, angeordnet. Es besteht dann eine kraftschlüssige Verbindung zwischen dem Lager 200, insbesondere dem Axiallager 220 und dem Walzenzapfen 320. Diese kraftschlüssige Verbindung läuft über das Axiallager 220, die Kontaktfläche 225, den Zylinder 120, die Kontaktfläche 128, die Mutter 150, das Außengewinde 112 des inneren Kolbens 110, den inneren Kolben 110, den Anschlagring 130 und die Nut 322 in dem Walzenzapfen 320. Diese kraftschlüssige Verbindung verhindert ein Abrutschen des Lagers 200 vom Walzenballen 330 weg.

Das erfindungsgemäße Verfahren zum Abziehen des Lagers 200 von dem ballennahen Abschnitt I des Walzenzapfens 320 mit Hilfe der erfindungsgemäßen Vorrichtung 100 wird nachfolgend unter Bezugnahme auf die Figuren 10 bis 14 näher beschrieben:
Zu Beginn des Abziehvorgangs wird zunächst das Sicherungselement bzw. Haltestück 160 entfernt, um ein Drehen der Mutter 150 zu ermöglichen; siehe Figur 10. Sodann wird die Aufziehdruck-Kammer 1 durch Zuführen des Druckmediums durch den Kanal 1-1 mit einem Aufziehdruck beaufschlagt, so dass der Zylinder 120 noch ein minimales Wegstück weiter gegen das Lager 200, 220 gedrückt und eine zweite Kontaktfläche 128 zwischen dem Zylinder 120 und der Mutter 150 aufgehoben wird; siehe Figur 11.

Sodann wird die Positionier-Druckkammer 3 durch Zuführen des Druckmediums über den Kanal 3-3 mit einem Verschiebedruck beaufschlagt, wodurch der äußere Kolben 140 von dem Walzenballen weg bewegt wird, und wodurch auch die erste Kontaktfläche 126 zwischen der Mutter und dem äußeren Kolben aufgehoben wird, wie dies in Figur 11 gezeigt ist.

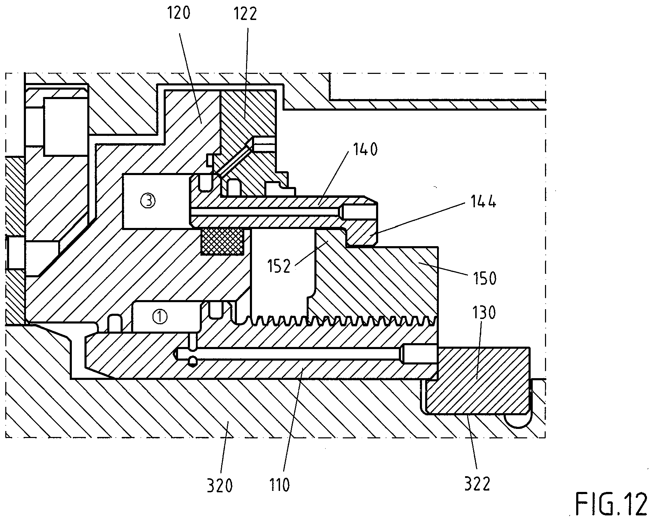

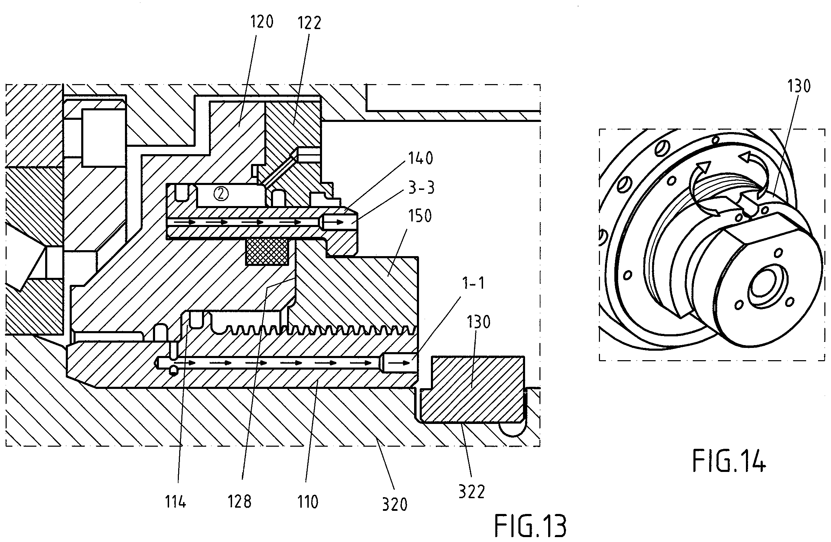

Die Verschiebung des äußeren Kolbens 140 nach außen, d. h. von dem Walzenballen weg, erfolgt vorzugsweise soweit, bis der Außenflansch 142 des äußeren Kolbens an dem Zylinderdeckel 122 anschlägt, wie in Figur 11 gezeigt.
Die Mutter 150 wird dann nach axial Außen gedreht, vorzugsweise so weit bis sie mit ihrem Außenflansch 152 an den Innenflansch 144 des äußeren Kolbens 140 anschlägt; siehe Figur 12. Der Aufziehdruck in der Aufziehdruck-Kammer 1 kann dann abgebaut werden; d. h. der Kanal 1-1 wird dann geöffnet; siehe Figur 13.

Es erfolgt eine Beaufschlagung der Abziehdruck-Kammer 2 mit dem Druckmedium durch den Kanal 2-2, wodurch der Zylinder 120 mit seinem Deckel 122 axial nach Außen gezogen wird, vorzugsweise solange, bis er an der zweiten Kontaktfläche 128 an der Mutter 150 anschlägt, wie dies ebenfalls in Figur 13 gezeigt ist. Voraussetzung dafür ist, dass neben dem Öffnen des Kanals 1-1 auch der Kanal 3-3 geöffnet ist, jeweils zum Abfluss des Druckmediums aus den Druckkammern 1 und 3.

Weil der Zylinder 120 über das Koppelelement 340 und den Deckel 350, welcher als Mitnehmer fungiert, mit dem Ölfilmlager 210 bzw. dem Einbaustück 400 gekoppelt ist, siehe Figur 2, werden das Lager 200 und das Einbaustück 400 bei einer Bewegung des ringförmigen Zylinders 120 vom Walzenballen weg mitgenommen und auf diese Weise ein Stück weit von dem Walzenzapfen 320 heruntergezogen und gelockert.

Zum Schluss wird dann der Anschlagring 130 entfernt; siehe Figur 14. Die Vorrichtung 100 kann dann zusammen mit dem Lager 200 sowie vorzugsweise auch mit dem Einbaustück 400 von dem Walzenzapfen 320 abgezogen werden.

### Bezugszeichenliste

- 1: Aufziehdruck-Kammer
- 1-1: Kanal für Druckmedium
- 2: Abziehdruck-Kammer
- 2-2: Kanal für Druckmedium
- 3: Positionier-Druckkammer
- 3-3: Kanal für Druckmedium
- 100: Vorrichtung
- 110: innerer Kolben
- 112: Außengewinde
- 114: äußerer Flansch des inneren Kolbens
- 120: Zylinder
- 122: Zylinderdeckel
- 126: erste Kontaktfläche
- 128: zweite Kontaktfläche
- 130: Anschlagring
- 140: äußerer Kolben
- 142: Außenflansch des äußeren Kolbens
- 144: Innenflansch des äußeren Kolbens
- 150: Mutter
- 152: Außenflansch der Mutter
- 160: Haltestück
- 200: Lager
- 210: Ölfilmlager
- 220: Axiallager
- 225: ballenferne Stirnseite des Axiallagers (Kontaktfläche)
- 230: Druckschulterring
- 300: Walze
- 320: Walzenzapfen
- 322: Nut
- 324: Zapfenbuchse
- 330: Walzenballen
- 340: ringförmiges Koppelelement
- 350: ringförmiger Deckel
- 400: Einbaustück

- I: ballennaher Abschnitt
- II: ballenferner Abschnitt
- A: axiale Richtung
- R: radiale Richtung

## Patentansprüche

1. Vorrichtung (100) zum Aufziehen eines Lagers (200) auf einen ballennahen Abschnitt (I) des Walzenzapfens (320) einer Walze (300) und zum Abziehen des Lagers (200) von dem ballennahen Abschnitt des Walzenzapfens (320), aufweisend:
eine erste Kolben-Zylindereinheit mit einem ringförmigen inneren Kolben (110), welcher auf einem ballenfernen Abschnitt (II) des Walzenzapfens (320) axial verschiebbar gelagert ist, und mit einem ringförmigen Zylinder (120), welcher zwischen dem Lager (200) und dem inneren Kolben (110) auf dem ballenfernen Abschnitt (II) ebenfalls axial verschiebbar gelagert ist,
wobei der ringförmige Zylinder und der innere Kolben teilweise überlappen und in axialer Richtung (A) relativ zueinander verschiebbar gelagert sind; und wobei zwischen dem ringförmigen Zylinder (120) und dem inneren Kolben (110) eine Aufziehdruck-Kammer (1) ausbildbar ist;
einen an dem ballenfernen Ende des Walzenzapfens (320) in axialer Richtung (A) festgelegten Anschlagring (130) als Anschlag für den inneren Kolben (110);
eine zweite Kolben-Zylindereinheit mit einem ringförmigen äußeren Kolben (140), welcher koaxial und radial weiter außen zu dem inneren Kolben (110) angeordnet und axial verschiebbar gelagert ist, und wobei ein Außenflansch (142) des äußeren Kolbens eine Abziehdruck-Kammer (2) der zweiten Kolben-Zylindereinheit in axialer Richtung (A) einseitig begrenzt; und
eine auf ein Außengewinde (112) des inneren Kolbens aufschraubbare Mutter (150) zum Fixieren des Lagers (200) in axialer Richtung (A);
**dadurch gekennzeichnet,**
**dass** der ringförmige Zylinder (120) mit einem an dessen ballenfernen Seite angeschlossenen ringförmigen Zylinderdeckel (122) die Zylindereinheit der zweiten Kolben-Zylindereinheit bildet, in welcher der äußere Kolben (140) axial verschiebbar gelagert ist, und
**dass** die Abziehdruck-Kammer (2) in axialer Richtung (A) durch den Außenflansch (142) des äußeren Kolbens (140) und den Zylinderdeckel (122) begrenzt ist.

2. Vorrichtung (100) nach Anspruch 1,
**dadurch gekennzeichnet,**
**dass** die zweite Kolben-Zylindereinheit als doppelt wirkende Kolben-Zylindereinheit ausgebildet ist und neben der Abziehdruck-Kammer (2) eine ausbildbare Positionier-Druckkammer (3) aufweist, welche in axialer Richtung (A) durch den äußeren Kolben (140) und den ringförmigen Zylinder (120) begrenzt ist.

3. Vorrichtung (100) nach Anspruch 2,
**dadurch gekennzeichnet,**
**dass** die Abziehdruck-Kammer (2) - in axialer Richtung gesehen -ballenferner als die Positionier-Druckkammer (3) ausbildbar ist.

4. Vorrichtung (100) nach einem der vorangegangenen Ansprüche,
**dadurch gekennzeichnet,**
**dass** an dem ballenfernen Ende des äußeren Kolbens (140) ein sich radial nach innen erstreckender Innenflansch (144) ausgebildet ist;
**dass** an dem ballennahen Ende der Mutter (150) ein sich radial nach außen erstreckender Außenflansch (152) ausgebildet ist; und
**dass** der äußere Kolben (140) radial weiter außerhalb als die Mutter (150) gelagert ist, wobei jedoch der Innenflansch (144) des äußeren Kolbens und der Außenflansch (152) der Mutter sich in axialer Richtung (A) gegenüberstehen; und
wobei der Außenflansch (152) der Mutter ballennäher als der Innenflansch (144) des äußeren Kolbens (140) angeordnet ist.

5. Vorrichtung (100) nach einem der vorangegangenen Ansprüche,
**dadurch gekennzeichnet,**
**dass** der Zylinderdeckel (122) einstückig mit dem ringförmigen Zylinder (120) ausgebildet ist.

6. Vorrichtung (100) nach einem der vorangegangenen Ansprüche,
**dadurch gekennzeichnet,**
**dass** an dem Ende des Walzenzapfens (320) eine Nut (322), vorzugsweise eine Ringnut vorgesehen ist zum Aufnehmen des Anschlagringes (130), wobei der Anschlagring zum Einbringen in die Nut als Klemmring oder als Klappring ausgebildet ist.

7. Vorrichtung (100) nach einem der vorangegangenen Ansprüche,
**gekennzeichnet durch**
ein Sicherungselement (160) zum Sichern der Mutter (150) auf dem inneren Kolben (110) gegen Losdrehen.

8. Vorrichtung (100) nach einem der vorangegangenen Ansprüche,
**dadurch gekennzeichnet,**
**dass** das Lager (200) als ein Ölfilmlager (210) zwischen einem Lagereinbaustück (400) und dem Walzenzapfen (320) ausgebildet ist.

9. Vorrichtung (100) nach Anspruch 8,
**dadurch gekennzeichnet,**
**dass** das Lager (200) neben dem ballennahen Ölfilmlager (210) ein Axiallager (220) aufweist, welches in axialer Richtung (A) zwischen dem Ölfilmlager (210) und dem Zylinder (120) angeordnet ist.

10. Verfahren zum Aufziehen eines Lagers (200) auf einen ballennahen Abschnitt (I) des Walzenzapfens (320) mit Hilfe einer Vorrichtung (100), aufweisend folgende Schritte:
Vorpositionieren des Lagers (200) auf dem ballennahen Abschnitt (I) des Walzenzapfens (320);
Vorpositionieren der Vorrichtung (100) auf dem ballenfernen Abschnitt (II) des Walzenzapfens;
Anbringen des Anschlagrings (130) an dem Ende des Walzenzapfens (320) als in axialer Richtung (A) festgelegter Anschlag für den inneren Kolben (110);
Beaufschlagen der Aufziehdruck-Kammer (1) mit einem Aufziehdruck, wodurch der innere Kolben (110) axial nach außen gegen den Anschlagring (130) und der Zylinder (120) axial nach innen gegen das Lager (200) verfahren wird, wodurch das Lager (200) auf den ballennahen Abschnitt (I) des Walzenzapfens (320) aufgezogen wird;
**dadurch gekennzeichnet,**
**dass** die Vorrichtung (100) ausgebildet ist nach einem der Ansprüche 2 - 9, und dass das Verfahren weiterhin folgende Schritte aufweist:
Beaufschlagen der Positionier-Druckkammer (3) mit einem Verschiebedruck, wodurch der äußere Kolben (140) axial nach außen von dem Walzenballen weg verschoben wird und wodurch eine erste Kontaktfläche (126) zwischen dem inneren Flansch (144) des äußeren Kolbens (140) und dem äußeren Flansch (152) der Mutter (150) aufgehoben wird; und
Drehen der Mutter (150) in Richtung Walzenballen gegen den Zylinder (120) zum Fixieren des Lagers in axialer Richtung (A). Sichern der Mutter (150) über das Haltestück (160).

11. Verfahren zum Abziehen eines Lagers (200) von einem ballennahen Abschnitt (I) des Walzenzapfens (320) mit Hilfe der Vorrichtung (100) nach einem der Ansprüche 2 - 9, aufweisend folgende Schritte:
Entfernen des Sicherungselements (160);
Beaufschlagen der Aufziehdruck-Kammer (1) mit einem Aufziehdruck, so dass der Zylinder (120) stärker gegen das Lager (200) gedrückt und eine zweite Kontaktfläche (128) zwischen dem Zylinder (120) und der Mutter (150) aufgehoben wird;
Beaufschlagen der Positionier-Druckkammer (3) mit einem Verschiebedruck zum Verschieben des äußeren Kolbens (140) von dem Walzenballen weg;
Zurückdrehen der Mutter (150) von dem Zylinder (120) weg axial nach außen, vorzugsweise so weit bis sie mit ihrem Außenflansch (152) an den Innenflansch (144) des äußeren Kolbens (140) anschlägt;
Abstellen des Aufziehdrucks in der Aufziehdruck-Kammer (1); und
Beaufschlagen der Abziehdruck-Kammer (2) mit einem Abziehdruck, wodurch der Zylinder (120) axial nach außen gegen die Mutter (150) gezogen wird; und
Entfernen des Anschlagsringes (130);
Abziehen der Vorrichtung (100) und des mit der Vorrichtung verbunden Lagers (200) von dem Walzenzapfens (320).

## Claims

1. Device (100) for drawing a bearing (200) onto a body-adjacent section (I) of the roll journal (320) of a roll (300) and drawing the bearing (200) off the body-adjacent section of the roll journal (320), comprising:
a first piston-cylinder unit with an annular inner piston (110), which is mounted on a body-remote section (II) of the roll journal (320) to be axially displaceable, and with an annular cylinder (120) which is mounted between the bearing (200) and the inner piston (110) on the body-remote section (II) to similarly be axially displaceable,
wherein the annular cylinder and the inner piston partly overlap and are mounted to be axially displaceable relative to one another in axial direction (A) and wherein a drawing-on pressure chamber (1) can be formed between the annular cylinder (120) and the inner piston (110);
an abutment ring (130), which is fixed to the body-remote end of the roll journal (320) in axial direction (A) as abutment for the inner piston (110);
a second piston-cylinder unit with an annular outer piston (140), which is arranged coaxially and radially further outwardly with respect to the inner piston (110) and is mounted to be axially displaceable and wherein an outer flange (142) of the outer piston at one side bounds a drawing-off pressure chamber (2) of the second piston-cylinder unit in axial direction (A); and
a nut (150), which can be screwed onto an external thread (112) of the inner piston, for fixing the bearing (200) in axial direction (A);
**characterised in that**
the annular cylinder (120) together with an annular cylinder cover (122), which is connected with the body-remote side of the cylinder, forms the cylinder unit of the second piston-cylinder unit, in which the outer piston (140) is mounted to be axially displaceable, and
the drawing-off pressure chamber (2) is bounded in axial direction (A) by the outer flange (142) of the outer piston (140) and the cylinder cover (122).

2. Device (100) according to claim 1, **characterised in that** the second piston-cylinder unit is constructed as a double-acting piston-cylinder unit and apart from the drawing-off pressure chamber (2) has a formable positioning pressure chamber (3) which is bounded in axial direction (A) by the outer piston (140) and the annular cylinder (120).

3. Device (100) according to claim 2, **characterised in that** the drawing-off pressure chamber (2) as seen in axial direction can be formed to be more remote from the body than the positioning pressure chamber (3).

4. Device (100) according to any one of the preceding claims, **characterised in that** a radially inwardly extending inner flange (144) is formed at the body-remote end of the outer piston (140);
a radially outwardly extending outer flange (152) is formed at the body-adjacent end of the nut (150); and
the outer piston (140) is mounted radially further outwardly than the nut (150), wherein, however, the inner flange (144) of the outer piston and the outer flange (152) of the nut are mutually opposite in axial direction (A) and wherein the outer flange (152) of the nut is arranged to be closer to the body than the inner flange (144) of the outer piston (140).

5. Device (100) according to any one of the preceding claims, **characterised in that** the cylinder cover (122) is formed integrally with the annular cylinder (120).

6. Device (100) according to any one of the preceding claims, **characterised in that** a groove (322), preferably an annular groove, for reception of the abutment ring (130) is provided at the end of the roll journal (320), wherein the abutment ring is constructed for introduction into the groove as a clamping ring or as a snap ring.

7. Device (100) according to any one of the preceding claims, **characterised by** a securing element (160) for securing the nut (150) to the inner piston (110) against untwisting.

8. Device (100) according to any one of the preceding claims, **characterised in that** the bearing (200) is formed as an oil film bearing (210) between a bearing chock (400) and the roll journal (320).

9. Device (100) according to claim 8, **characterised in that** the bearing (200) comprises apart from the body-adjacent oil film bearing (210) an axial bearing (220) which in axial direction (A) is arranged between the oil film bearing (210) and the cylinder (120).

10. Method for drawing a bearing (200) onto a body-adjacent section (I) of the roll journal (320) with the help of a device (100), comprising the following steps:
pre-positioning the bearing (200) on the body-adjacent section (I) of the roll journal (320);
pre-positioning the device (100) on the body-remote section (II) of the roll journal;
mounting the abutment ring (130) on the end of the roll journal (320) as an abutment, which is fixed in axial direction (A), for the inner piston (110);
acting on the drawing-on pressure chamber (1) with a drawing-on pressure, whereby the inner piston (110) is moved axially outwardly against the abutment ring (130) and the cylinder (120) axially inwardly against the bearing (200), whereby the bearing (200) is drawn onto the body-adjacent section (I) of the roll journal (320;
**characterised in that**
the device (100) is constructed according to any one of claims 2 to 9 and
the method further comprises the following steps:
acting on the positioning pressure chamber (3) with a displacing pressure, whereby the outer piston (140) is displaced axially outwardly away from the roll body and whereby a first contact surface (126) between the inner flange (144) of the outer piston (140) and the outer flange (152) of the nut (150) is removed; and
turning the nut (150) in the direction of the roll body against the cylinder (120) for fixing the bearing in axial direction (A) and securing the nut (150) by way of the retaining member (160).

11. Method for drawing a bearing (200) off a body-adjacent section (I) of the roll journal (320) with the help of the device (100) according to any one of claims 2 to 9, comprising the following steps:
removing the securing element (160);
acting on the drawing-on pressure chamber (1) with a drawing-on pressure so that the cylinder (120) is urged more strongly against the bearing (200) and a second contact surface (128) between the cylinder (120) and the nut (150) is removed;
acting on the positioning pressure chamber (3) with a displacing pressure for displacing the outer piston (140) away from the roll body;
turning back the nut (150) axially outwardly away from the cylinder (120), preferably until by its outer flange (152) it abuts the inner flange (144) of the outer piston (140);
terminating the drawing-on pressure in the drawing-on chamber (1); and
acting on the drawing-off pressure chamber (2) with a drawing-off pressure, whereby the cylinder (120) is drawn axially outwardly against the nut (150); and
removing the abutment ring (130);
drawing the device (100) and the bearing (200), which is connected with the device, off the roll journal (320).

## Revendications

1. Dispositif (100) destiné au montage d'un palier (200) sur un tronçon (I) du tourillon de cylindre de laminage (320) d'un cylindre (300), proche du corps du cylindre, et au retrait du palier (200) par rapport au tronçon du tourillon de cylindre de laminage (320), proche du corps du cylindre, présentant :
une première unité du type piston-cylindre comprenant un piston interne (110) de configuration annulaire, qui est monté d'une manière apte à se déplacer dans la direction axiale sur un tronçon (II) du tourillon de cylindre de laminage (320), éloigné du corps du cylindre, et comprenant un cylindre de configuration annulaire (120) qui est également monté d'une manière apte à se déplacer dans la direction axiale, sur le tronçon (II) éloigné du corps du cylindre de laminage, entre le palier (200) et le piston interne (110) ;
dans lequel le cylindre de configuration annulaire et le piston interne se chevauchent en partie et sont montés d'une manière apte à se déplacer l'un par rapport à l'autre dans la direction axiale (A) ; et dans lequel une chambre de pression de montage (1) peut être réalisée entre le cylindre de configuration annulaire (120) et le piston interne (110) ;
un anneau faisant office de butée (130) fixé dans la direction axiale (A) à l'extrémité du tourillon de cylindre de laminage (320) éloignée du corps du cylindre, faisant office de butée pour le piston interne (110) ;
une deuxième unité de type piston-cylindre comprenant un piston externe de configuration annulaire (140) qui est disposé en position coaxiale par rapport au piston interne (110) et dans la direction radiale plus à l'extérieur par rapport à ce dernier, et qui est monté d'une manière apte à se déplacer dans la direction axiale ; et dans lequel une bride externe (142) du piston externe délimite d'un côté, dans la direction axiale (A), une chambre de pression de rétraction (2) de la deuxième unité de type piston-cylindre ; et
un écrou (150) destiné à la fixation du palier (200) dans la direction axiale (A), qui peut venir se disposer par vissage sur un filet de vis externe (112) du piston interne ;
**caractérisé**
**en ce que** le cylindre (120) de configuration annulaire forme, avec un couvercle de cylindre (122) de configuration annulaire relié au côté dudit cylindre éloigné du corps du cylindre, l'unité en forme de cylindre de la deuxième unité de type piston-cylindre, dans laquelle le piston externe (140) est monté d'une manière apte à se déplacer dans la direction axiale ; et
**en ce que** la chambre de pression de rétraction (2) est délimitée dans la direction axiale (A) par la bride externe (142) du piston externe (140) et par le couvercle de cylindre (122).

2. Dispositif (100) selon la revendication 1,
**caractérisé**
**en ce que** la deuxième unité de type piston-cylindre est réalisée sous la forme d'une unité de type piston-cylindre du genre à double action et présente, à côté de la chambre de pression de rétraction (2), une chambre de pression de positionnement (3) apte à être réalisée, qui est délimitée, dans la direction axiale (A), par le piston externe (140) et par le cylindre (120) de configuration annulaire.

3. Dispositif (100) selon la revendication 2,
**caractérisé**
**en ce que** la chambre de pression de rétraction (2) peut être réalisée
- lorsqu'on regarde dans la direction axiale - à une distance du corps du cylindre plus éloignée que celle de la chambre de pression de positionnement (3).

4. Dispositif (100) selon l'une quelconque des revendications précédentes,
**caractérisé**
**en ce qu'**une bride interne (144) s'étendant dans la direction radiale vers l'intérieur, est réalisée à l'extrémité du piston externe (140) éloignée du corps du cylindre ;
**en ce qu'**une bride externe (152) s'étendant vers l'extérieur dans la direction radiale est réalisée à l'extrémité de l'écrou (150) proche du corps du cylindre ; et
**en ce que** le piston externe (140) est monté, dans la direction radiale, plus loin à l'extérieur que l'écrou (150) ; dans lequel néanmoins la bride interne (144) du piston externe et la bride externe (152) de l'écrou sont disposées à l'opposé l'une de l'autre dans la direction axiale (A) ; et
dans lequel la bride externe (152) de l'écrou est disposée plus près du corps du cylindre que ne l'est la bride interne (144) du piston externe (140).

5. Dispositif (100) selon l'une quelconque des revendications précédentes,
**caractérisé**
**en ce que** le couvercle du cylindre (122) est réalisé en une seule pièce avec le cylindre (120) de configuration annulaire.

6. Dispositif (100) selon l'une quelconque des revendications précédentes,
**caractérisé**
**en ce que**, à l'extrémité du tourillon de cylindre de laminage (320), on prévoit une rainure (322), de préférence une rainure de forme annulaire, destinée à la réception de l'anneau de butée (130) ; dans lequel l'anneau de butée est réalisé pour venir s'insérer dans la rainure sous la forme d'un anneau de serrage ou sous la forme d'un anneau rabattable.

7. Dispositif (100) selon l'une quelconque des revendications précédentes,
**caractérisé**
**par** un élément de sécurité (160) destiné à maintenir l'écrou (150) sur le piston interne (110) à l'encontre d'un dévissage.

8. Dispositif (100) selon l'une quelconque des revendications précédentes,
**caractérisé**
**en ce que** le palier (200) est réalisé sous la forme d'un palier (210) du type à film d'huile entre une empoise de palier (400) et le palier de cylindre de laminage (320).

9. Dispositif (100) selon la revendication 8,
caractérisé
en ce le palier (200) présente, à côté du palier (210) du type à film d'huile proche du corps du cylindre, un palier axial (220) qui est disposé, dans la direction axiale (A), entre le palier (210) du type à film d'huile et le cylindre (120).

10. Procédé pour le montage d'un palier (200) sur un tronçon (I) du tourillon de cylindre de laminage (320), proche du corps du cylindre, à l'aide d'un dispositif (100), présentant les étapes suivantes dans lesquelles on met en oeuvre :
un prépositionnement du palier (200) sur le tronçon (I) du tourillon de cylindre de laminage (320), proche du corps du cylindre ;
un prépositionnement du dispositif (100) sur le tronçon (II) du tourillon de cylindre de laminage, éloigné du corps du cylindre ;
une application de l'anneau (130) faisant office de butée contre l'extrémité du tourillon de cylindre de laminage (320) sous la forme d'une butée destinée au piston interne (110), fixée dans la direction axiale (A) ;
une sollicitation de la chambre de pression de montage (1) avec une pression de montage, tant et si bien que le piston interne (110) est soumis à un déplacement dans la direction axiale vers l'extérieur jusque contre l'anneau faisant office de butée (130) et le cylindre (120) est soumis à un déplacement dans la direction axiale vers l'intérieur jusque contre le palier (200), d'une manière telle que le palier (200) est monté sur le tronçon (I) du tourillon de cylindre de laminage (320), proche du corps du cylindre ;
**caractérisé en ce que**
le dispositif (100) est réalisé conformément à l'une quelconque des revendications 2 à 9 ; et
**en ce que** le procédé présente en outre les étapes suivantes dans lesquelles on met en œuvre :
une sollicitation de la chambre de pression de positionnement (3) avec une pression de déplacement, tant et si bien que le piston externe (140) est soumis à un déplacement dans la direction axiale vers l'extérieur à l'écart du corps du cylindre et tant et si bien que l'on soulève une première surface de contact (126) entre la bride interne (144) du piston externe (140) et la bride externe (152) de l'écrou (150) ; et
un vissage de l'écrou (150) dans la direction du corps du cylindre jusque contre le cylindre (120) à des fins de fixation du palier dans la direction axiale (A) et une fixation de l'écrou (150) par l'intermédiaire de la pièce de fixation (160).

11. Procédé pour le retrait d'un palier (200) à l'écart d'un tronçon (I) du tourillon de cylindre de laminage (320), proche du corps du cylindre, à l'aide du dispositif (100) selon l'une quelconque des revendications 2 à 9, présentant les étapes suivantes dans lesquelles on met en oeuvre :
un retrait de l'élément de sécurité (160) ;
une sollicitation de la chambre de pression de montage (1) avec une pression de montage, d'une manière telle que le cylindre (120) est soumis à une pression plus forte pour venir se placer contre le palier (200) et qu'une deuxième surface de contact (128) est soulevée entre le cylindre (120) et l'écrou (150) ;
une sollicitation de la chambre de pression de positionnement (3) avec une pression de déplacement dans le but de soumettre le piston externe (140) à un déplacement à l'écart du corps du cylindre ;
un dévissage de l'écrou (150) à l'écart du cylindre (120) dans la direction axiale vers l'extérieur, de préférence jusqu'à une distance telle qu'il vienne buter avec sa bride externe (150) contre la bride interne (144) du piston externe (140) ;
une suppression de la pression de montage dans la chambre de pression de montage (1) ; et
une sollicitation de la chambre de pression de rétraction (2) avec une pression de rétraction, tant et si bien que le cylindre (120) est tiré dans la direction axiale vers l'extérieur jusque contre l'écrou (150) ; et
une élimination de l'anneau (130) faisant office de butée ;
un retrait du dispositif (100) et du palier (200) relié au dispositif, à l'écart du tourillon de cylindre de laminage (320).
